Europäisches Patentamt

European Patent Office

Office européen des brevets

(19)

(11) Numéro de publication: **0 250 350
B1**

(12) **FASCICULE DE BREVET EUROPEEN**

(45) Date de publication du fascicule du brevet:
22.08.90

(51) Int. Cl.⁵: **B65G 19/28**

(21) Numéro de dépôt: **87440034.4**

(22) Date de dépôt: **11.06.87**

(54) **Dispositif de support de bacs de manutention pour transporteurs à chaîne.**

(30) Priorité: **12.06.86 FR 8608628**

(43) Date de publication de la demande:
**23.12.87 Bulletin 87/52**

(45) Mention de la délivrance du brevet:
**22.08.90 Bulletin 90/34**

(84) Etats contractants désignés:
**BE CH DE ES GB IT LI SE**

(56) Documents cités:
**BE-A- 686 531
FR-A- 978 710
GB-A- 9 729
GB-A- 702 387**

(73) Titulaire: **G T A, Sàrl, 124, Rue Nationale Z.I. Stiring,
F-57600 FORBACH(FR)**

(72) Inventeur: **Greff, Alain, 7, rue de Bousbach,
F-57460 Behren-les-Forbach(FR)**
Inventeur: **Matz, Gilbert, 23, rue de la Forêt,
F-57470 Hombourg-Haut(FR)**

(74) Mandataire: **Nuss, Pierre, 10, rue Jacques Kablé,
F-67000 Strasbourg(FR)**

ACTORUM AG

## Description

La présente invention concerne le domaine de la manutention de produits en vrac, en particulier de produits de cokerie à haute température, comportant des bacs de manutention servant au guidage d'une chaîne de transport, et a pour objet un dispositif de support des dits bacs de manutention.

Actuellement, les transporteurs à chaîne utilisés pour les produits de cokerie sont généralement sous forme de portions de gaines boulonnées bout à bout entre-elles par leur fond et par leur flanc, et dans lesquelles est guidée la chaîne de transport. Un tel mode de réalisation nécessite, cependant, d'importants travaux d'entretien pour le remplacement des portions de gaines usées sous l'effet combiné de la chaleur dégagée par les produits et du frottement de ces derniers lors de leur évacuation. Par ailleurs, du fait de la liaison rigide entre les portions de gaines, les effets de dilatation, dûs aux hautes températures, sont cumulés sur toute la longueur des tranporteurs ainsi réalisés et doivent, en conséquence, être compensés en totalité à l'extrémité desdits transporteurs.

On connaît également, par GB-A 702 387 un moyen de guidage de la chaîne d'un tel tranporteur constitué par des rails inversés superposés reliés entre eux par des crochets et dans lequels sont disposés des bacs de guidage de la chaîne. Le mode de réalisation décrit dans ce document est, cependant, très complexe à mettre en œuvre et d'un prix de revient élevé en conséquence. En outre, les interventions éventuelles de maintenance sont également difficiles et longues du fait de la complexité du dispositif.

La présente invention a pour but de pallier ces inconvénients.

Elle a, en effet, pour objet un dispositif de support de bacs de manutention pour transporteurs à chaîne, caractérisé en ce qu'il est constitué par au moins un moyen de réception de bacs de manutention superposés interchangeables, disposés librement dans ledit moyen formé par une base supportant, par sa partie inférieure, les bacs de manutention inférieurs et guidant, par ses côtés verticaux, les côtés verticaux des bacs inférieurs et supérieurs, et par des arrêtoirs latéraux de maintien des bacs de manutention fixés au moyen de réception des bacs de manutention à des intervalles réguliers correspondant à la longueur des bacs augmentée du jeu de glissement et de dilatation longitudinal entre lesdits bacs, les bacs de manutention supérieurs étant munis chacun à une extrémité d'un plat de chevauchement glissant s'engageant sous l'extrémité libre du bac précédent ou suivant et étant supportés, de façon à permettre un glissement, sur la partie supérieure des côtés verticaux des bacs inférieurs.

L'invention sera mieux comprise, grâce à la description ci-après, qui se rapporte à des modes de réalisation préférés, donnés à titre d'exemples non limitatifs, et expliqués avec référence au dessin schématique annexé, dans lequel:

la figure 1 est une vue partielle en perspective du dispositif conforme à l'invention, représentant deux modes de réalisation possibles du moyen de réception désigné respectivement par solution A et solution B;

la figure 2 est une vue partielle, à plus grande échelle, du dispositif selon la solution A au niveau d'un arrêtoir muni d'un taquet de blocage, et

la figure 3 est une vue analogue à la figure 2 du dispositif selon la solution B muni d'une bride de blocage.

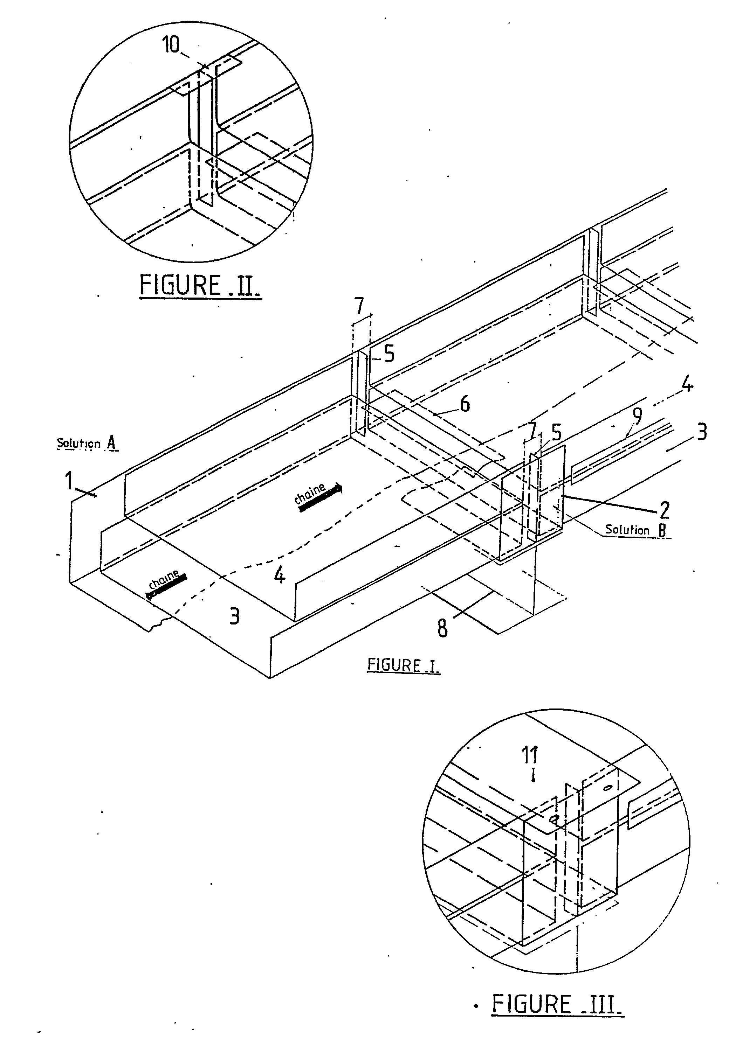

Conformément à l'invention et comme le montre plus particulièrement, à titre d'exemple, la figure 1 du dessin annexé, le dispositif de support de bacs de manutention 3, 4 pour transporteurs à chaîne est essentiellement constitué par au moins un moyen 1, 2 de réception de bacs de manutention 3, 4 superposés interchangeables, disposés librement dans ledit moyen 1, 2 formé par une base supportant, par sa partie inférieure, les bacs de manutention inférieurs 3 et guidant, par ses côtés verticaux, les côtés verticaux des bacs inférieurs 3 et supérieures 4, et par des arrêtoirs latéraux 5 de maintien des bacs de manutention 3, 4 fixés au moyen 1, 2 de réception des bacs de manutention 3, 4 à des intervalles réguliers correspondant à la longueur des bacs 3 et 4 augmentée du jeu de glissement et de dilatation longitudinal entre lesdits bacs 3 et 4, les bacs de manutention supérieurs 4 étant munis chacun à une extrémité d'un plat de chevauchement glissant 6 s'engageant sous l'extrémité libre du bac précédent ou suivant et étant supportés, de façon à permettre un glissement, sur la partie supérieure des côtés verticaux des bacs inférieurs 3.

Selon une caractéristique préférée de l'invention, le moyen 1 de réception des bacs 3 et 4 est sous forme d'au moins une gaine de coffrage munie, sur ses parois latérales, à des intervalles réguliers correspondants à la longueur des bacs 3 et 4 augmentés du jeu de glissement et de dilatation longitudinal, des arrêtoirs 5. Ce mode de réalisation correspond à la solution A de la figure 1. Le jeu de glissement et de dilatation longitudinal est représenté sur la figure 1 par l'intervalle 7 qui s'étend de manière égale de part et d'autre des arrêtoirs 5.

Conformément à une variante de réalisation de l'invention, correspondant à la solution B suivant la figure 1, le moyen 2 de réception des bacs 3 et 4 est sous forme d'étriers montés sur des embases 8, à un écartement régulier correspondant à la longueur des bacs 3 et 4 augmentée du jeu de glissement et de dilatation longitudinal.

Les bacs 3 et 4, sont simplement mis en place bout à bout par disposition dans la gaine 1 ou dans les étriers 2, la gaine 1 ou les étriers 2 servant de support à l'ensemble des bacs de manutention 4, ainsi qu'à réaliser l'étanchéité entre les différents bacs par chevauchement. Les arrêtoirs 5 prévus à intervalles réguliers sur les parois latérales de la gaine 1 ou sur les parois de chaque étrier 2 sont destinés à limiter la course de glissement de chaque bac 3 ou 4, de sorte qu'un cumul de glissement ou de dilatation ne peut pas se produire, ceci en limitant un jeu de glissement 7 prédéterminé entre deux arrêtoirs 5 consécutifs, de sorte qu'est réalisée une compensation locale des effets de dilatation. En outre, les plats de chevauchement équipant une extrémité de chaque bac supérieur 4, permettent, par glissement sous le fond de l'extrémité du bac précédent ou suivant, d'assurer d'étanchéité de la goulotte de transport réalisée par les bacs de manutention supérieurs 4, tout en conservant les possibilités de glissement mutuel entre lesdits bacs.

Selon une autre caractéristique préférée de l'invention, dans le cas d'utilisation d'un moyen 2 de réception de bacs de manutention sous forme d'étriers, les flancs des bacs de manutention supérieurs 4 ou inférieurs 3 sont avantageusement munis de plats longitudinaux d'étanchéité 9. Ce mode de réalisation permet d'assurer une étanchéité parfaite des bacs inférieurs 3 contre toute entrée indésirable de matièrer dans ces derniers.

Conformément à une autre caractéristique préfrée de l'invention, et comme le montre la figure 2, dans le cas de réalisation du moyen de réception 1 sous forme d'une gaine, ce dernier est avantageusement muni au niveau de chaque arrêtoir 5 d'un taquet de blocage 10 s'étendant longitudinalement, et de manière égale de part et de d'autre dudit arrêtoir 5. Ainsi, un soulèvement accidentel des bacs 4 est évité et leur guidage en glissement est assuré.

Selon une autre variante de réalisation de l'invention et comme le montre la figure 3, dans le cas de réalisation du moyen de réception 2 sous forme d'étriers, chaque étrier est pourvu d'une bride de blocage et de recouvrement 11 fixée par ses extrémités sur ledit étrier et s'étendant de manière égale de part et d'autre des arrêtoirs 5. Ce mode de réalisation permet également d'assurer un guidage en glissement des bacs 4. En outre, ces brides 11 peuvent, le cas échéant, servir à la fixation de couvercles dans le cas où le transport à chaîne doit être fermé en dehors de sa zone de chargement.

Grâce à l'invention il est possible de réaliser un transporteur à chaîne comportant des bacs de manutention interchangeables, pouvant être posés facilement sans boulonnage ni fixation, et pouvant se dilater individuellement.

Bien entendu, l'invention n'est pas limitée aux modes de réalisation décrits et représentés au dessin annexé.

## Revendications

1. Dispositif de support de bacs de manutention (3, 4) pour transporteurs à chaîne, caractérisé en ce qu'il est constitué par au moins un moyen (1, 2) de réception de bacs de manutention (3, 4) superposés interchangeables, disposés librement dans ledit moyen (1, 2) formé par une base supportant, par sa partie inférieure, les bacs de manutention inférieurs (3) et guidant, par ses côtés verticaux, les côtés verticaux des bacs inférieurs (3) et supérieurs (4), et par des arrêtoirs latéraux (5) de maintien des bacs de manutention (3, 4) fixés au moyen (1, 2) de réception des bacs de manutention (3, 4) à des intervalles réguliers correspondant à la longueur des bacs (3 et 4) augmentée du jeu de glissement et de dilatation longitudinal entre lesdits bacs (3 et 4), les bacs de manutention supérieurs (4) étant munis chacun à une extrémité d'un plat de chevauchement glissant (6) s'engageant sous l'extrémité libre du bac précédent ou suivant et étant supportés, de façon à permettre un glissement, sur la partie supérieure des côtés verticaux des bacs inférieurs (3).

2. Dispositif, suivant la revendication 1, caractérisé en ce que le moyen (1) de réception des bacs (3 et 4) est sous forme d'au moins une gaine de coffrage.

3. Dispositif, suivant la revendication 1, caractérisé en ce que le moyen (2) de réception des bacs (3 et 4) est sous forme d'étriers montés sur des embases (8), à un écartement régulier correspondant à la longueur des bacs (3 et 4) augmentée du jeu de glissement et de dilatation longitudinal.

4. Dispositif, suivant l'une quelconque des revendications 1 et 3, caractérisé en ce que, dans le cas d'utilisation d'un moyen (2) de réception de bacs de manutention sous forme d'étriers, les flancs des bacs de manutention supérieurs (4) ou inférieurs (3) sont avantageusement munis de plats longitudinaux d'étanchéité (9).

5. Dispositif, suivant l'une quelconque des revendications 1 et 2, caractérisé en ce que, dans le cas de réalisation du moyen de réception (1) sous forme d'une gaine, ce dernier est avantageusement muni au niveau de chaque arrêtoir (5) d'un taquet de blocage (10) s'étendant longitudinalement, et de manière égale de part et d'autre dudit arrêtoir (5).

6. Dispositif, suivant l'une quelconque des revendications 1, 3 et 4, caractérisé en ce que, dans le cas de réalisation du moyen de réception (2) sous forme d'étriers, chaque étrier est pourvu d'une bride de blocage et de recouvrement (11) fixée par ses extrémités sur ledit étrier et s'étendant de manière égale de part et d'autre des arrêtoirs (5).

## Patentansprüche

1. Rinnentragevorrichtung (3, 4) für Kettentransportgeräte, dadurch gekennzeichnet, daß sie aus mindestens einem Mittel (1, 2) zur Aufnahme von austauschbaren, übereinander angeordneten Rinnen (3, 4), die frei in diesem Mittel (1, 2) angeordnet sind, das aus einer Unterlage besteht, die mit ihrem Unterteil die unteren Rinnen (3) abstützt und mit ihren Seitenteilen die Vertikalseiten der unteren (3) und oberen (4) Rinnen führt, und aus seitlichen Feststellern (5) zur Halterung der Rinnen (3, 4), die an dem Mittel (1, 2) zur Aufnahme der Rinnen (3, 4) in regelmäßigen Abständen entsprechend der Länge der Rinnen (3 und 4), erweitert um den Gleit- und Dehnungsspielraum in der Länge zwischen diesen Rinnen (3 und 4) befestigt sind, wobei die oberen Rinnen (4) an je einem Ende mit einer überlappenden Gleitplatte (6) versehen sind, die unter das freie Ende der vorhergehenden oder nachfolgenden Rinne greift und die auf dem Oberteil der Vertikalseiten der unteren Rinnen (3) so aufliegen, daß ein Gleiten ermöglicht wird, besteht.

2. Vorrichtung nach Anspruch 1, dadurch gekennzeichnet, daß das Mittel (1) zur Aufnahme der Rinnen (3 und 4) als mindestens eine Ummantelung ausgebildet ist.

3. Vorrichtung nach Anspruch 1, dadurch gekennzeichnet, daß das Mittel (2) zur Aufnahme der Rinnen (3 und 4) als Hängeeisen ausgebildet ist, die auf Fußplatten (8), mit regelmäßigem, der Länge der Rinnen (3 und 4) entsprechenden Abstand, vermehrt um den Gleit- und Dehnungsspielraum in der Länge montiert sind.

4. Vorrichtung nach einem der Ansprüche, und 3, dadurch gekennzeichnet, daß, im Falle der Verwendung eines Mittels (2) zur Aufnahme der Rinnen in Form von Hängeeisen, die Flanken der oberen (4) oder unteren (3) Rinnen vorteilhaft mit längslaufenden Dichtungsleisten (9) versehen sind.

5. Vorrichtung nach einem der Ansprüche 1 und 2, dadurch gekennzeichnet, daß im Falle der Ausführung des Aufnahmemittels (1) in Form einer Ummantelung, diese letztere vorteilhaft in Höhe jedes Feststellers (5) mit einem sich längs und gleichmäßig zu beiden Seiten dieses Feststellers (5) erstreckenden Stopper (10) ausgestattet ist.

6. Vorrichtung nach einem der Ansprüche 1, 3 und 4, dadurch gekennzeichnet, daß im Falle der Ausführung des Aufnahmemittels in Form von Hängeeisen, jedes Hängeeisen mit einem Flansch zur Arretierung und Abdeckung (11) versehen ist, der an seinen Enden an diesem Hängeeisen befestigt ist und sich gleichmäßig zu beiden Seiten der Feststeller (5) erstreckt.

**Claims**

1. Device for supporting materials handling troughs (3, 4) for chain conveyors, characterised in that it consists of at least one means (1, 2) for receiving interchangeable, superimposed materials handling troughs (3, 4) arranged freely in said means (1, 2), which is formed by a base supporting, by its lower portion, the lower materials handling troughs (3) and guiding, by its vertical sides, the vertical sides of the lower troughs (3) and upper troughs (4), and of lateral stops (5) for keeping the materials handling troughs (3, 4) fixed to the means (1, 2) for receiving the materials handling troughs (3, 4) at regular intervals corresponding to the length of the troughs (3 and 4) increased by the longitudinal clearance for sliding and expansion between said troughs (3 and 4), the upper materials handling troughs (4) each being equipped at one end with a sliding flat overlapping strip (6) engaging beneath the free end of the preceding or following trough and being supported, so as to permit sliding, on the upper portion of the vertical sides of the lower troughs (3).

2. Device according to claim 1, characterised in that the means (1) for receiving the troughs (3 and 4) is in the form of at least one formwork-type casing.

3. Device according to claim 1, characterised in that the means (2) for receiving the troughs (3 and 4) is in the form of stirrups mounted on bases (8) with regular spacing corresponding to the length of the troughs (3 and 4) increased by the longitudinal clearance for sliding and expansion.

4. Device according to any one of claims 1 and 3, characterised in that, if a means (2) for receiving materials handling troughs in the form of stirrups is used, the flanks of the upper materials handling troughs (4) or lower materials handling troughs (3) are advantageously equipped with longitudinal flat sealing strips (9).

5. Device according to any one of claims 1 and 2, characterised in that, if the receiving means (1) is produced in the form of a casing, this casing is advantageously equipped, in the region of each stop (5), with a locking lug (10) extending longitudinally and equally on either side of said stop (5).

6. Device according to any one of claims 1, 3 and 4, characterised in that, if the receiving means (2) is produced in the form of stirrups, each stirrup is provided with a locking and covering strap (11) fixed by its ends on said stirrup and extending equally on either side of the stops (5).

FIGURE .II.

FIGURE .I.

Solution A

Solution B

chaine

chaine

FIGURE .III.